# EUROPEAN PATENT APPLICATION

(11) **EP 4 763 885 A1**
(43) Date of publication of application: **24.06.2026**
(21) Application number: 24856725.7
(22) Date of filing: 12.08.2024
(51) Int. Cl.: C08G 59/02, C08G 59/04, C09D 163/00

(54) **COMPOSITION OF SYNTHESIS REACTION PRODUCT OF ISOSORBIDE-BASED EPOXY COMPOUND, PAINT COMPOSITION COMPRISING SAME, AND METHOD FOR PREPARING ISOSORBIDE-BASED EPOXY COMPOUND**

(30) Priority: 18.08.2023 KR 20230108493
(71) Applicant: Kuk Do Chemical Co., Ltd., Seoul 08588 (KR)
(72) Inventor: LEE, Hyeseung, Seoul 08588 (KR); SHIM, Sunwoo, Seoul 08588 (KR); LEE, Yumi, Seoul 08588 (KR); NOH, Kyung Hyun, Seoul 08588 (KR); LEE, Sejin, Seoul 08588 (KR)
(74) Representative: Vossius & Partner Patentanwälte Rechtsanwälte mbB
(86) International application number: PCT/KR2024/011969
(87) International publication number: WO 2025/042113

(57) **Abstract**

The present disclosure relates to a composition of a synthesis reaction product of an isosorbide-based epoxy compound, a paint composition including the same, and a method for preparing an isosorbide-based epoxy compound, and specifically, to a composition of a synthesis reaction product of an isosorbide-based epoxy compound with low viscosity and high purity, a paint composition including the same, and a method for preparing an isosorbide-based epoxy compound with improved yield.

## Description

### Technical Field

The present disclosure claims priority to and the benefit of Korean Patent Application No. 10-2023-0108493 filed in the Korean Intellectual Property Office on August 18, 2023, the entire contents of which are incorporated herein by reference.

The present disclosure relates to a composition of a synthesis reaction product of an isosorbide-based epoxy compound with low viscosity and high purity, a paint composition including the same, and a method for preparing an isosorbide-based epoxy compound with improved yield.

### Background Art

Polymer compounds are generally manufactured using raw materials derived from petroleum resources. However, in recent years, concerns over the depletion of petroleum resources have increased, and accordingly, there is a growing demand for polymer resins using raw materials obtained from biomass resources such as plants.

In particular, as environmental issues arising from processes of using petroleum resources intensify, the sustainability and environmental benefits of biomass resources are increasingly being highlighted. From this perspective, development of biomass-based monomer and polymer production technologies is treated as an important issue in both academia and industry. In particular, in view of concerns that global warming caused by increases in carbon dioxide emissions and their accumulation leads to climate change, there is also a demand for development of polymer resins using plant-derived monomers as raw materials, which generate extremely low carbon emission during the manufacturing process.

Along with the sustainability and environmental benefits of biomass resources, there is an increasing need to develop polymers having a novel structure with a new carbon skeleton capable of securing a low glass transition temperature and the like together with mechanical properties equivalent or superior to those of petroleum-based polymers.

From this aspect, isosorbide (1,4:3, 6-dianhydrohexitol) is a material obtained from, unlike existing raw materials based on the petrochemical industry, plant resources such as corn and potatoes. When isosorbide is used as a monomer for engineering plastics such as polycarbonates, excellent thermal properties are obtained due to its structural rigidity.

Methods for preparing epoxy resins by reacting such isosorbide with epichlorohydrin have been disclosed in various forms and described in numerous documents. However, when preparing epoxy resins using preparation methods described in most documents, the products are synthesized in forms with n=1 or higher rather than the form of isosorbide glycidyl ether (n=0), leading to high viscosity. For example, most synthesis methods using commercially applicable sodium hydroxide described in previously known documents result in a viscosity of 10,000 cPs or more at room temperature.

In addition, when preparing an isosorbide epoxy resin using preparation methods described in most documents, it is difficult to additionally recover the epoxy resin remaining in the salt layer, making it difficult to achieve a yield exceeding 90%.

Accordingly, there is a need for the development of a novel preparation method providing a high content of isosorbide diglycidyl ether (n=0), low viscosity, and an excellent yield.

### DISCLOSURE

### Technical Problem

To address the above-described problems of the related art, the present disclosure is directed to providing a composition of a synthesis reaction product of an isosorbide-based epoxy compound having sustainability and environmental benefits of biomass resources and exhibiting low viscosity and high purity, a paint composition including the same, and a method for preparing an isosorbide-based epoxy compound with improved yield.

However, problems to be solved by the present disclosure are not limited to the above-mentioned problem, and other problems not mentioned will be clearly understood by those skilled in the art from the following description.

### Technical Solution

In order to achieve the object described above, one embodiment of the present disclosure provides a composition of a synthesis reaction product of an isosorbide-based epoxy compound, the composition comprising: an isosorbide-based epoxy compound represented by the following Chemical Formula 1; and hydrolyzable chlorine, wherein a content of the hydrolyzable chlorine is less than 5,000 ppm.

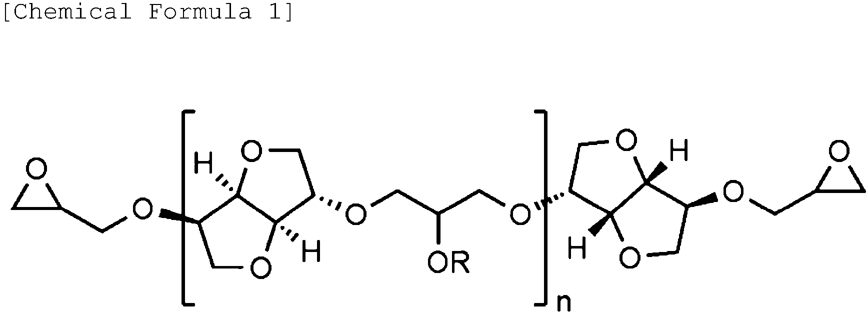

In Chemical Formula 1,
R is H or 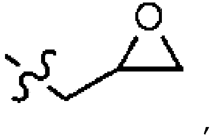 and
n is an integer of 0 to 100.

Another embodiment of the present disclosure provides a method for preparing an isosorbide-based epoxy compound, the method comprising: (S10) reacting isosorbide, an organic halide and a basic compound in the presence of a phase transfer catalyst to obtain a reaction product including a salt and an isosorbide-based epoxy compound; (S30) introducing the reaction product to a candle filter device to filter the salt and obtain a filtrate; and (S50) removing the organic halide from the filtrate to obtain the isosorbide-based epoxy compound.

### Advantageous Effects

A composition of a synthesis reaction product of an isosorbide-based epoxy compound according to one embodiment of the present disclosure includes hydrolyzable chlorine in an amount of less than 5,000 ppm, and accordingly, a composition of a synthesis reaction product of an isosorbide-based epoxy compound with low viscosity and high purity can be provided.

A method for preparing an isosorbide-based epoxy compound according to one embodiment of the present disclosure is capable of recovering a remaining isosorbide-based epoxy compound by filtering a salt using a candle filter device, and accordingly, an isosorbide-based epoxy compound can be prepared with high yield.

A paint composition according to one embodiment of the present disclosure includes the composition of a synthesis reaction product of an isosorbide-based epoxy compound, and accordingly, a paint composition that is environmentally friendly and has excellent coating workability and properties can be provided.

### Best Mode

In the present specification, a description of a certain part "including" certain components means that it may further include other components, and does not exclude other components unless particularly stated on the contrary.

In the present specification, "A and/or B" refers to "A and B, or A or B".

In the present specification, 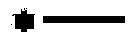 and 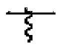 each refer to a bond linking to another substituent.

Hereinafter, the present disclosure will be described in more detail.

One embodiment of the present disclosure provides a composition of a synthesis reaction product of an isosorbide-based epoxy compound, the composition including: an isosorbide-based epoxy compound represented by the following Chemical Formula 1; and hydrolyzable chlorine, wherein a content of the hydrolyzable chlorine is less than 5,000 ppm.

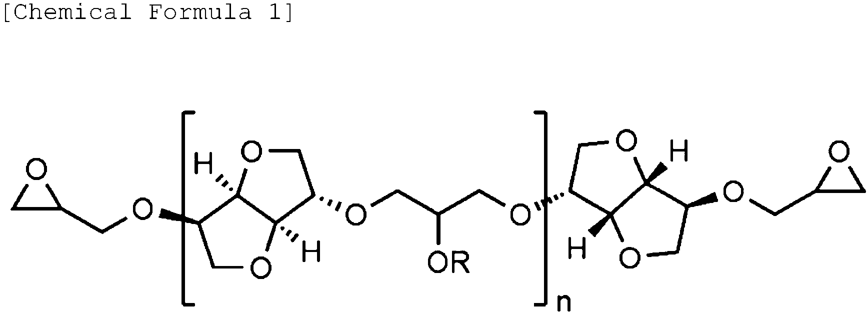

In Chemical Formula 1,
R is H or 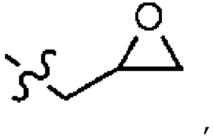 and
n is an integer of 0 to 100.

The composition of a synthesis reaction product of an isosorbide-based epoxy compound according to one embodiment of the present disclosure is obtained as a composition including an isosorbide-based epoxy compound and byproducts generated during the synthesis process.

The composition of a synthesis reaction product of an isosorbide-based epoxy compound according to one embodiment of the present disclosure includes the isosorbide-based epoxy compound represented by Chemical Formula 1. Specifically, by including isosorbide with a high biocarbon content, the composition may have sustainability and environmental benefits of biomass resources.

According to one embodiment of the present disclosure, the isosorbide-based epoxy compound may be a single isosorbide epoxide of Chemical Formula 1 or a mixture of isosorbide epoxides having different substituents R and/or indices n. When various types of isosorbide epoxides are present, the substituents R may be applied in various ways as specified in Chemical Formula 1. In addition, n may vary as a value ranging from 0 to 100. Specifically, n may be a value ranging from 0 to 40.

The composition of a synthesis reaction product of an isosorbide-based epoxy compound according to one embodiment of the present disclosure includes hydrolyzable chlorine. Specifically, the hydrolyzable chlorine (Hy-Cl) refers to chlorine that remains without reacting with a basic compound during the preparation of an isosorbide-based epoxy compound and is capable of being hydrolyzed, and may be related to purity of the isosorbide-based epoxy compound. For example, the hydrolyzable chlorine may be a halohydrin ether intermediate, but is not limited thereto, and may include a compound corresponding to hydrolyzable chlorine produced in the synthesis reaction of a known isosorbide-based epoxy compound.

The composition of a synthesis reaction product of an isosorbide-based epoxy compound according to one embodiment of the present disclosure includes the hydrolyzable chlorine in an amount of less than 5,000 ppm. Specifically, the composition of a synthesis reaction product of an isosorbide-based epoxy compound may include the hydrolyzable chlorine in an amount of less than 2,000 ppm. Preferably, the composition may include the hydrolyzable chlorine in an amount of 500 ppm to 1,650 ppm. The fact that the composition of a synthesis reaction product of an isosorbide-based epoxy compound includes the hydrolyzable chlorine in an amount of less than the above-described concentration indicates that the composition of a synthesis reaction product of an isosorbide-based epoxy compound is prepared with high purity.

According to one embodiment of the present disclosure, the isosorbide-based epoxy compound in which n is 0 in Chemical Formula 1 may be present in an amount of 40 wt% to 70 wt% relative to the total weight of the isosorbide-based epoxy compound. Specifically, the compound in which n is 0 in Chemical Formula 1 may be present in an amount of 50 wt% to 60 wt% relative to the total weight of the isosorbide-based epoxy compound. By adjusting the ratio of the compound in which n is 0 in Chemical Formula 1 in the above-mentioned range, purity of the isosorbide-based epoxy compound may be controlled.

According to one embodiment of the present disclosure, the composition of a synthesis reaction product of an isosorbide-based epoxy compound may have an epoxy group equivalent weight of 120 g/eq to 500 g/eq. Specifically, the isosorbide-based epoxy compound included in the composition of a synthesis reaction product of an isosorbide-based epoxy compound may have an epoxy group equivalent weight of 120 g/eq to 350 g/eq, 130 g/eq to 300 g/eq, 135 g/eq to 250 g/eq, 140 g/eq to 200 g/eq, or 160 g/eq to 170 g/eq. Herein, the epoxy group equivalent weight represents a value obtained by dividing the molecular weight by the number of reactive groups, and may be measured using, for example, a neutralization titration method.

According to one embodiment of the present disclosure, the composition of a synthesis reaction product of an isosorbide-based epoxy compound may have a Brookfield viscosity of 500 cPs to 2,000 cPs measured at 25°C. Specifically, the composition of a synthesis reaction product of an isosorbide-based epoxy compound may have a viscosity of 800 cPs to 1,800 cPs, 900 cPs to 1,700 cPs, 1,000 cPs to 1,600 cPs, 1,100 cPs to 1,400 cPs, or 1,200 cPs to 1,300 cPs. Herein, the Brookfield viscosity represents a resistance value of a fluid applied to a spindle using a rotational viscometer, and may be measured using a Brookfield viscometer.

One embodiment of the present disclosure provides a method for preparing an isosorbide-based epoxy compound, the method including: (S10) reacting isosorbide, an organic halide and a basic compound in the presence of a phase transfer catalyst to obtain a reaction product including a salt and an isosorbide-based epoxy compound; (S30) introducing the reaction product to a candle filter device to filter the salt and obtain a filtrate; and (S50) removing the organic halide from the filtrate to obtain the isosorbide-based epoxy compound.

The composition of a synthesis reaction product of an isosorbide-based epoxy compound according to one embodiment of the present disclosure may be prepared as a composition of the synthesis reaction product in the method for preparing an isosorbide-based epoxy compound.

Through the method for preparing an isosorbide-based epoxy compound according to one embodiment of the present disclosure, an isosorbide-based epoxy compound with low viscosity, high purity and significantly improved yield may be prepared.

According to one embodiment of the present disclosure, the obtaining of a reaction product may include: (S11) mixing the isosorbide and the organic halide in the presence of the phase transfer catalyst to perform a ring-opening reaction under a temperature condition of 40°C to 100°C; (S12) adding the basic compound to a product of the ring-opening reaction, and performing an epoxy substitution reaction under a temperature condition of 40°C to 100°C; and (S13) subjecting a product of the substitution reaction to an azeotropic distillation reaction under a reduced pressure condition at a temperature of 40°C to 100°C to perform a ring-closing reaction.

The candle filter is specifically a candle-shaped cylindrical filter, and may be formed of a porous permeable material. By pressurizing and filtering a fluid using the candle filter, target solid particles having a predetermined size or more may be filtered and separated from a liquid. For example, in the method for preparing an isosorbide-based epoxy compound, by pressurizing and filtering the reaction product using the candle filter, the salt in a solid state may be prevented from passing through the porous permeable material in the candle filter, and thus may be separated from the filtrate.

According to one embodiment of the present disclosure, in the method for preparing an isosorbide-based epoxy compound, the candle filter device may filter a salt having a particle size of 2.7 µm or more. Preferably, the candle filter device may filter a salt having a particle size of 3.0 µm or more. As the candle filter device filters a salt present in a solid state in the reaction product fluid, the isosorbide-based epoxy compound remaining in the filtered salt may be recovered, thereby improving the yield.

According to one embodiment of the present disclosure, in the method for preparing an isosorbide-based epoxy compound, the obtaining of a filtrate may involve performing filtration while maintaining a temperature condition of 20°C to 100°C. By maintaining the above-described temperature condition, efficiency of the obtaining of a filtrate may be improved.

According to one embodiment of the present disclosure, in the method for preparing an isosorbide-based epoxy compound, the isosorbide-based epoxy compound may be represented by the following Chemical Formula 1.

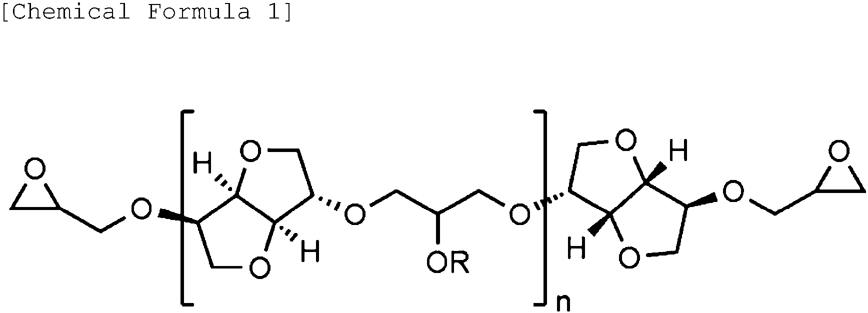

In Chemical Formula 1,
R is H or 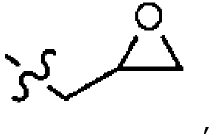 and
n is an integer of 0 to 100.

Specifically, the isosorbide-based epoxy compound is a bio-derived compound rather than an existing petroleum-based compound as described above, and has a biocarbon content of 100% based on 100% of the total carbon content. Herein, the biocarbon content may be measured by calculating a ratio of bio-derived carbon atoms in the total organic carbon atoms. For example, the biocarbon content of the isosorbide-based epoxy compound may be measured by inferring the percentage (%) of the radioisotope (¹⁴C) relative to the total number of organic carbon atoms, and may be specifically measured in accordance with ASTM D 6866 of the American Society for Testing and Materials. Herein, the biocarbon content may be expressed as a number% based on the ratio of the number of carbon atoms.

In addition, the isosorbide-based epoxy compound may be a single isosorbide epoxide of Chemical Formula 1 or a mixture of isosorbide epoxides having different substituents R and/or indices n. When various types of isosorbide epoxides are present, the substituents R may be applied in various ways as specified in Chemical Formula 1. In addition, n may vary as a value ranging from 0 to 100. Specifically, n may be a value ranging from 0 to 40.

According to one embodiment of the present disclosure, in the method for preparing an isosorbide-based epoxy compound, the yield of the isosorbide-based epoxy compound obtained in the obtaining of the isosorbide-based epoxy compound may be 90% or more. Specifically, the yield of the isosorbide-based epoxy compound in the filtrate obtained through the candle filter device may be 90% or more and less than 100%, 95% or more and less than 100%, 96% or more and less than 100%, 97% or more and less than 100%, or 98% or more and less than 100%. By recovering the isosorbide-based epoxy compound remaining in the salt while filtering the salt through the candle filter device as described above, the yield of the isosorbide-based epoxy compound in the synthesis reaction product may be improved.

One embodiment of the present disclosure provides a paint composition including the composition of a synthesis reaction product of an isosorbide-based epoxy compound.

As the paint composition according to one embodiment of the present disclosure includes the composition of a synthesis reaction product of an isosorbide-based epoxy compound, properties such as adhesion, moisture resistance and light resistance, which are properties required for paint, may be secured while maintaining environmental friendliness and excellent coating workability and appearance.

Hereinafter, the method for preparing an isosorbide-based epoxy compound will be described by dividing the process into individual steps.

### (S10) Obtaining Reaction Product

Step (S10) involves reacting isosorbide, an organic halide and a basic compound in the presence of a phase transfer catalyst to obtain a reaction product including a salt and an isosorbide-based epoxy compound.

In the method for preparing an isosorbide-based epoxy compound according to the present disclosure, the process of obtaining a reaction product including a salt and an isosorbide-based epoxy compound is performed in step (S10) by performing a ring-opening reaction through mixing isosorbide and an organic halide in the presence of a phase transfer catalyst, followed by performing a substitution reaction by reacting the result with a basic compound, and performing a ring-closing reaction.

The reaction product obtained in step (S10) may include an isosorbide-based epoxy compound, a phase transfer catalyst, an organic halide, hydrolyzable chlorine and a salt.

### <(S11) Ring-Opening Reaction>

This step involves performing a ring-opening reaction through mixing isosorbide and an organic halide in the presence of a phase transfer catalyst under a mild atmosphere of a temperature of 40°C to 100°C and under an atmospheric pressure condition instead of a previously known reduced pressure condition.

Specifically, the ring-opening reaction may be performed at a pressure of 752 mmHg to 768 mmHg, or 755 mmHg to 765 mmHg, or 758 mmHg to 762 mmHg. For example, the ring-opening reaction may be performed under a pressure condition of about 760 mmHg.

In addition, the ring-opening reaction may be performed at a temperature of 45°C or higher, 48°C or higher or 50°C or higher, and 90°C or lower, 80°C or lower, 70°C or lower, 65°C or lower, or 60°C or lower. For example, the ring-opening reaction may be performed under a temperature condition of 48°C to 55°C.

The ring-opening reaction may be performed for 0.1 hours to 6 hours, and specifically, may be performed for 0.12 hours to 5 hours, 0.14 hours to 3 hours, or 0.16 hours to 2 hours.

In the method for preparing an isosorbide-based epoxy compound according to the present disclosure, a compound represented by the following Chemical Formula 2 may be used as the phase transfer catalyst.

[Chemical Formula 2] ArₐR²₄₋ₐN⁺ (X1_{b})⁻

In Chemical Formula 2,
Ars are the same as or different from each other, and each independently substituted or unsubstituted C₆₋₂₀ aryl, or C₁₋₃ alkyl substituted with substituted or unsubstituted C₆₋₂₀ aryl,
R²s are the same as or different from each other, and each independently C₁₋₂₀ alkyl,
X¹s are the same as or different from each other, and each independently chlorine (Cl), bromine (Br), iodine (I) or fluorine (F),
a is an integer of 1 to 4, and
b is an integer of 1 to 3.

Meanwhile, unless otherwise specified in the present specification, the following terms may be defined as follows.

Halogen may be fluorine (F), chlorine (Cl), bromine (Br), or iodine (I).

The C₁₋₂₀ alkyl, that is, the alkyl having 1 to 20 carbon atoms may be linear, branched or cyclic alkyl. Specifically, the alkyl having 1 to 20 carbon atoms may be linear alkyl having 1 to 20 carbon atoms; linear alkyl having 1 to 15 carbon atoms; linear alkyl having 1 to 5 carbon atoms; branched or cyclic alkyl having 3 to 20 carbon atoms; branched or cyclic alkyl having 3 to 15 carbon atoms; or branched or cyclic alkyl having 3 to 10 carbon atoms. For example, the alkyl having 1 to 20 carbon atoms (C₁₋₂₀) may include methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, cyclooctyl and the like, but is not limited thereto.

In particular, the C₁₋₃ alkyl, that is, the alkyl having 1 to 3 carbon atoms may be linear or branched alkyl. Specifically, the alkyl having 1 to 3 carbon atoms may include methyl, ethyl, propyl, isopropyl and the like, but is not limited thereto.

The C₆₋₂₀ aryl, that is, the aryl having 6 to 20 carbon atoms may be monocyclic, bicyclic or tricyclic aromatic hydrocarbon. For example, the aryl may include phenyl, biphenyl, naphthyl, anthracenyl, phenanthrenyl, fluorenyl and the like, but is not limited thereto.

The above-described substituents may be optionally substituted with one or more substituents selected from the group consisting of a hydroxyl group; halogen; alkyl, alkenyl, aryl or alkoxy; alkyl, alkenyl, aryl or alkoxy including one or more heteroatoms among heteroatoms of Groups 14 to Group 16; silyl; alkylsilyl or alkoxysilyl; a phosphine group; a phosphide group; a sulfonate group; and a sulfone group within a range that provides the same or similar effects as the intended effects.

For example, the phase transfer catalyst represented by Chemical Formula 2 may be at least one selected from the group consisting of benzyltrimethylammonium chloride (BTMAC), benzyltrimethylammonium bromide, benzyltriethylammonium chloride (BTEAC), benzyltriethylammonium bromide, benzyltributylammonium chloride (BTBAC), benzyltributylammonium bromide, benzyltrimethylammonium dichloroiodate, benzyltriphenylammonium chloride, and methyltriphenylammonium chloride. Preferably, the phase transfer catalyst represented by Chemical Formula 2 may be at least one of benzyltrimethylammonium chloride (BTMAC), benzyltriethylammonium chloride (BTEAC) and benzyltributylammonium chloride (BTBAC). More preferably, the phase transfer catalyst represented by Chemical Formula 2 may be benzyltriethylammonium chloride (BTEAC).

In step (S10), the phase transfer catalyst may be introduced in an amount of 0.1 wt% to 6 wt% based on the weight of the isosorbide. Specifically, the phase transfer catalyst may be introduced in an amount of 0.3 wt% to 5.5 wt%, 0.5 wt% to 5 wt%, 0.7 wt% to 4.5 wt%, 0.9 wt% to 4 wt%, 1.1 wt% to 3.5 wt%, 1.3 wt% to 3 wt%, or 1.5 wt% to 2.5 wt%.

In step (S10), the organic halide may be at least one selected from the group consisting of epibromohydrin, epifluorohydrin, epiiodohydrin, and epichlorohydrin. Preferably, the organic halide may be epichlorohydrin.

In step (S10), the organic halide may be introduced in an amount of 1.0 mole to 20.0 moles relative to the isosorbide hydroxyl group. For example, the organic halide may be introduced in an amount of 1.5 moles to 18.0 moles, 2.0 moles to 15.0 moles, 2.5 moles to 10.0 moles, 3.0 moles to 8.0 moles, or 3.2 moles to 6.0 moles relative to the isosorbide hydroxyl group.

### <(S12) Substitution Reaction>

This step involves adding a basic compound after performing the ring-opening reaction, and performing an epoxy substitution reaction under a mild atmosphere of a temperature of 40°C to 100°C and under an atmospheric pressure condition instead of a previously known reduced pressure condition.

Specifically, the substitution reaction may be performed at a pressure of 752 mmHg to 768 mmHg, 755 mmHg to 765 mmHg, or 758 mmHg to 762 mmHg. For example, the substitution reaction may be performed under a pressure condition of about 760 mmHg.

In addition, the substitution reaction may be performed at a temperature of 45°C or higher, 48°C or higher or 50°C or higher, and 90°C or lower, 80°C or lower, 70°C or lower, 60°C or lower or 55°C or lower. For example, the substitution reaction may be performed under a temperature condition of 50°C to 55°C.

The substitution reaction may be performed for 0.1 hours to 6 hours, and specifically, may be performed for 0.5 hours to 5 hours, 1.0 hour to 4 hours or 1.5 hours to 3 hours.

In the substitution reaction, the basic compound may be one or more alkali metal hydroxides. Specifically, the basic compound may be at least one selected from the group consisting of lithium hydroxide, potassium hydroxide, calcium hydroxide and sodium hydroxide (NaOH). Preferably, the basic compound may be sodium hydroxide (NaOH).

In the substitution reaction, the basic compound may be introduced in an amount of 0.05 moles to 2.5 moles relative to the isosorbide hydroxyl group. For example, the basic compound may be introduced in an amount of 0.05 moles to 2.0 moles, 0.06 moles to 1.5 moles, 0.06 moles to 1.0 mole, 0.06 moles to 0.8 moles, 0.07 moles to 0.5 moles, 0.08 moles to 0.4 moles, or 0.1 moles to 0.3 moles relative to the isosorbide hydroxyl group.

Meanwhile, the pressure difference (△mmHg) between the ring-opening reaction described above and the substitution reaction is close to 0, and they may be performed under substantially the same pressure condition.

### <(S13) Ring-Closing Reaction>

This step involves performing, after performing the substitution reaction, a ring-closing reaction via an azeotropic distillation reaction at a temperature of 40°C to 100°C under a reduced pressure condition to obtain a reaction product including an isosorbide-based epoxy compound and a salt.

Specifically, the azeotropic distillation reaction may be performed under a pressure condition of 70 mmHg to 500 mmHg. More specifically, the pressure of the azeotropic distillation reaction may be 75 mmHg or more, 80 mmHg or more, 85 mmHg or more, 90 mmHg or more, 95 mmHg or more, 100 mmHg or more, 110 mmHg or more, 120 mmHg or more, 130 mmHg or more or 140 mmHg or more, and 480 mmHg or less, 450 mmHg or less, 420 mmHg or less, 400 mmHg or less, 380 mmHg or less, 350 mmHg or less, 320 mmHg or less, 300 mmHg or less, 280 mmHg or less, 250 mmHg or less, 220 mmHg or less, or 200 mmHg or less. For example, the azeotropic distillation reaction may be performed under a pressure condition of 140 mmHg to 160 mmHg.

In addition, the azeotropic distillation reaction may be performed at a temperature of 40°C to 100°C. Specifically, the azeotropic distillation reaction may be performed at a temperature of 45°C or higher, 48°C or higher, 50°C or higher, 52°C or higher or 55°C or higher, and 90°C or lower, 85°C or lower, 80°C or lower, 78°C or lower, 75°C or lower or 72°C or lower. For example, the azeotropic distillation reaction may be performed under a temperature condition of 60°C to 70°C.

In the ring-closing reaction, the azeotropic distillation reaction may be performed after additionally adding a basic compound, and the basic compound may be one or more alkali metal hydroxides. Specifically, the basic compound may be at least one selected from the group consisting of lithium hydroxide, potassium hydroxide, calcium hydroxide and sodium hydroxide (NaOH). Preferably, the basic compound may be sodium hydroxide (NaOH).

In the ring-closing reaction, the basic compound may be introduced in an amount of 0.05 moles to 2.5 moles relative to the isosorbide hydroxyl group. For example, the basic compound may be introduced in an amount of 0.08 moles to 2.0 moles, 0.1 moles to 1.8 moles, 0.2 moles to 1.6 moles, 0.3 moles to 1.5 moles, 0.4 moles to 1.35 moles, 0.5 moles to 1.2 moles or 0.7 moles to 1.1 moles relative to the isosorbide hydroxyl group.

Specifically, the amount of the basic compound introduced in the ring-closing reaction may be about 2 times to about 15 times, about 3.5 times to about 12.5 times or about 4 times to about 9 times based on weight relative to the amount of the basic compound introduced in the substitution reaction, while the basic compound is introduced in the above-mentioned molar ratio in the substitution reaction described above. Preferably, the amount of the basic compound introduced may be about 4 times.

The azeotropic distillation reaction may be performed for 0.5 hours to 10 hours, and specifically, may be performed for 1 hour to 9 hours, 2 hours to 8 hours, or 3 hours to 7 hours.

Meanwhile, the pressure difference (△mmHg) between the ring-opening reaction described above and the azeotropic distillation reaction may be 250 mmHg or more, or 250 mmHg to 698 mmHg, and specifically, may be 270 mmHg or more, or 270 mmHg to 610 mmHg. Particularly, in the present disclosure, the ring-opening reaction is performed under a pressure condition close to atmospheric pressure, whereas the azeotropic distillation reaction is performed under a pressure condition having a relatively high degree of pressure reduction.

In addition, the pressure difference (△mmHg) between the substitution reaction described above and the azeotropic distillation reaction may be 250 mmHg or more, or 250 mmHg to 698 mmHg, and specifically, may be 270 mmHg or more, or 270 mmHg to 610 mmHg. Particularly, in the present disclosure, the substitution reaction is performed under a pressure condition close to atmospheric pressure, whereas the azeotropic distillation reaction is performed under a pressure condition having a relatively high degree of pressure reduction.

### (S30) Separating Salt and Obtaining Filtrate

Step (S30) involves passing the reaction product, which is obtained through step (S10), through a candle filter device under a temperature condition of 20°C to 100°C to filter the salt and obtain a filtrate.

Specifically, the reaction product fluid produced through step (S10) is sent to a candle filter using a pump, and as it passes through the candle filter, the fluid is separated into a liquid filtrate passing through the candle filter, and a solid salt filtered by the candle filter. The liquid filtrate passing through the candle filter may be returned to a fluid inlet to perform step (S30) again or stored to perform step (S50) to be described later.

Through the step of passing the reaction product fluid through a candle filter to filter the salt and obtain a filtrate, the yield of the isosorbide-based epoxy compound may be maximized by recovering the isosorbide-based epoxy compound remaining in the filtered salt while filtering the salt present in a solid state.

The filtrate obtained after filtering the salt in step (S30) may include the isosorbide-based epoxy compound, the organic halide, the hydrolyzable chlorine, and the phase transfer catalyst.

The salt filtered in step (S30) may have a particle size of 2.7 µm or more or 3.0 µm or more.

The salt filtered in step (S30) may be sodium chloride (NaCl). Specifically, when the layer of salts filtered by the candle filter reaches a certain thickness, the rate of the reaction product fluid passing through the salts decreases, filtration efficiency is reduced, and filter pressure increases. Therefore, after sufficiently recovering the isosorbide-based epoxy compound remaining in the salts, the salt layer reaching a certain thickness may be separated.

In addition, step (S30) may be performed at a temperature of 20°C to 100°C. Specifically, step (S30) may be performed at a temperature of 25°C or higher, 28°C or higher, 30°C or higher, 32°C or higher or 35°C or higher, and 90°C or lower, 80°C or lower, 70°C or lower, 60°C or lower, 50°C or lower or 40°C or lower. For example, step (S30) may be performed under a temperature condition of 35°C to 40°C. Preferably, step (S30) may be performed at a temperature of 35°C.

### (S50) Obtaining Isosorbide-Based Epoxy Compound

Step (S50) involves removing the organic halide from the filtrate obtained through step (S30) to obtain the isosorbide-based epoxy compound.

The composition of a synthesis reaction product obtained in step (S50) may include the isosorbide-based epoxy compound and the hydrolyzable chlorine, and the isosorbide-based epoxy compound may be obtained from the composition of a synthesis reaction product.

Specifically, the composition of a synthesis reaction product including an isosorbide-based epoxy compound may be obtained by removing the unreacted remaining organic halide from the filtrate obtained in step (S30). When removing the unreacted remaining organic halide, the organic halide may be volatized at a high temperature and removed, however, the organic halide may not be completely removed. Preferably, the temperature may be raised up to 160°C and the pressure may be reduced to a maximum of 5 torr to remove the unreacted remaining organic halide.

### Mode for Invention

Hereinafter, preferred examples are presented to help understand the present disclosure. However, the following examples are provided to more readily understand the present disclosure, and the present disclosure is not limited thereby.

### <Example>

### Example 1

To a 1,000 mL round bottom flask having a reflux condenser equipped with a decanter, a stirrer and a nitrogen inlet, isosorbide (ISB) (100 g) and epichlorohydrin (510 g) were introduced, and dissolved while heating to 60°C. Herein, the epichlorohydrin (ECH) was introduced in an amount of 4 moles relative to the isosorbide hydroxyl group (OH). When the solution in the system was completely dissolved, benzyltriethylammonium chloride (BTEAC) (2 g) was introduced thereto, and a ring-opening reaction was performed for 10 minutes under a condition of 50°C and atmospheric pressure (760 mmHg). Herein, the benzyltriethylammonium chloride (BTEAC), which is a phase transfer catalyst, was introduced in an amount of 2 wt% based on 100 wt% of the isosorbide weight. Then, after the ring-opening reaction, an epoxy substitution reaction was performed for 2 hours under a condition of 50°C and atmospheric pressure (760 mmHg), while adding a 50% aqueous sodium hydroxide (NaOH) solution (22 g) in two portions at 1-hour intervals. Herein, the sodium hydroxide was introduced so that its molar ratio was 0.2 moles relative to the isosorbide hydroxyl group (OH). After that, the temperature was raised to 65°C, and a 50% aqueous sodium hydroxide (NaOH) solution (88 g) was quantitatively injected over 3 hours under a pressure condition of 150 mmHg while the reaction water was continuously removed through a reflux reaction, and an epoxy ring-closing reaction was performed via an azeotropic distillation reaction under reduced pressure to obtain a reaction product including a salt and an isosorbide-based epoxy compound. Herein, the sodium hydroxide was introduced so that its molar ratio was 0.8 moles relative to the isosorbide hydroxyl group (OH). The total amount of the sodium hydroxide introduced in the substitution reaction and the ring-closing reaction was adjusted so that the molar ratio was 1 mole relative to the isosorbide hydroxyl group (OH).

After the above-described ring-closing reaction was finished, the reaction product fluid, which is the resulting reaction material, was introduced to a candle filter device to filter the salt (NaCl) as a salt layer, and a filtrate was separately obtained. Herein, the filtration may be performed at 35°C.

The epichlorohydrin (ECH) was removed therefrom after raising the temperature to 160°C and reducing the pressure to a maximum of 5 torr to obtain a composition of a synthesis reaction product of an isosorbide-based epoxy compound.

### <Comparative Example>

### Comparative Example 1

A composition of a synthesis reaction product of an isosorbide-based epoxy compound was obtained in the same manner as in Example 1, except that, after the ring-closing reaction was finished, water in an amount of 2.2 times the theoretical amount of the salt (NaCl) was introduced to the resulting first reaction product, and the mixture solution was stirred and then transferred to a funnel to remove the lower aqueous layer and thus remove the salt (NaCl).

The reaction yield in the process for preparing the composition of a synthesis reaction product of an isosorbide-based epoxy compound according to each of Example 1 and Comparative Example 1 is shown in the following Table 1.

**[Table 1]**

| | Example 1 | Comparative Example 1 |
|---|---|---|
| Yield (%) | 98.1 | 55.4 |

The reaction yield in Table 1 is a value expressed as percentage (%) of the total weight of the isosorbide-based epoxy compound in the composition of a synthesis reaction product produced in step (S50) relative to the total weight of the isosorbide introduced in step (S10).

### <Experimental Example>

Properties of the composition of a synthesis reaction product of an isosorbide-based epoxy compound obtained in each of Example 1 and Comparative Example 1 were evaluated, and the measured values are shown in the following Table 2.

### a) Content of compound with n=0 in composition of synthesis reaction product of isosorbide-based epoxy compound

The composition of a synthesis reaction product of an isosorbide-based epoxy compound obtained according to each of Example 1 and Comparative Example 1 was dissolved in THF at a concentration of 2.5 wt%, and analyzed by gel permeation chromatography systems (GPC; Shimazu, Shodex, KF-801, 802, 803 and 805 columns). Herein, the analysis temperature was 40°C, and as a mobile phase, tetrahydrofuran (HPLC grade) was eluted at a flow rate of 1 mL/min. Through the GPC data measured as above, the content of the isosorbide diglycidyl ether (n=0) compound (GPC, %) in the total content of the composition was determined.

### b) Epoxy group equivalent weight

For the composition of a synthesis reaction product of an isosorbide-based epoxy compound obtained according to each of Example 1 and Comparative Example 1, an epoxy group equivalent weight was measured using a neutralization titration method. Specifically, the composition of a synthesis reaction product of an isosorbide-based epoxy compound was dissolved in 1,4-dioxane, then reacted after adding a 0.2 N-HCl solution thereto, and then titrated with a 0.1 N-NaOH methanol solution to measure an epoxy group equivalent weight (EEW, g/eq). Herein, the epoxy group equivalent weight (EEW, g/eq) represents a value obtained by dividing the molecular weight by the number of reactive groups, and may be measured using, for example, a neutralization titration method.

### c) viscosity

For the composition of a synthesis reaction product of an isosorbide-based epoxy compound obtained according to each of Example 1 and Comparative Example 1, viscosity (cPs) was measured at 25°C using a rotational viscometer, namely a Brookfield viscometer. Herein, the Brookfield viscosity represents a resistance value of a fluid applied to a spindle using the rotational viscometer.

### d) Concentration of hydrolyzable chlorine (Hy-Cl)

For the composition of a synthesis reaction product of an isosorbide-based epoxy compound obtained according to each of Example 1 and Comparative Example 1, hydrolyzable chlorine in the composition was measured using a neutralization titration method. Specifically, the composition of a synthesis reaction product of an isosorbide-based epoxy compound was dissolved in 1,4-dioxane, then a 0.1 N KOH-methanol solution was added thereto, and the mixture solution was heated to 70°C and reacted with a reflux condenser attached thereto. Then, glacial acid was added thereto, and the mixture solution was titrated with an aqueous AgNO₃ solution to measure the concentration of the hydrolyzable chlorine, and the results are shown below.

**[Table 2]**

| | Example 1 | Comparative Example 1 |
|---|---|---|
| n=0 Content (GPC, %) | 55.6 | 55.5 |
| EEW (g/eq) | 161.5 | 159.3 |
| 25°C Viscosity (cPs·s) | 1221 | 893 |
| Hy-Cl Concentration (ppm) | 1620.4 | 5045.5 |
| Yield (%) | 98.1 | 55.4 |

As shown in Table 2, it could be verified that Example 1, in which the reaction product fluid obtained by performing step (S10) according to the present disclosure was introduced to a candle filter device to filter the salt and remove epichlorohydrin therefrom, exhibited higher epoxy group equivalent weight and viscosity compared to Comparative Example 1 employing a method of introducing water, transferring the mixture solution to a funnel, and removing the salt, and in particular, the concentration of the hydrolyzable chlorine (Hy-Cl), which is a byproduct, was significantly reduced, and the preparation yield of the isosorbide-based epoxy compound was significantly improved.

## Claims

1. A composition of a synthesis reaction product of an isosorbide-based epoxy compound, the composition comprising:
an isosorbide-based epoxy compound represented by the following Chemical Formula 1; and
hydrolyzable chlorine,
wherein a content of the hydrolyzable chlorine is less than 5,000 ppm: 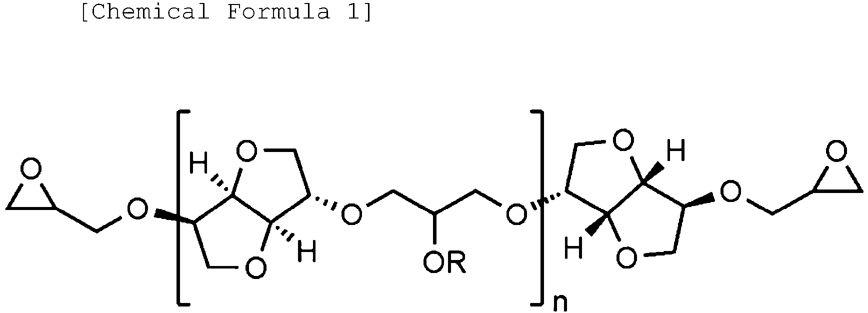
in Chemical Formula 1,
R is H or 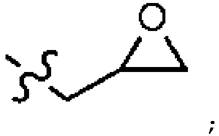 and
n is an integer of 0 to 100.

2. The composition of claim 1, wherein the compound in which n is 0 in Chemical Formula 1 is present in an amount of 40 wt% to 70 wt% relative to a total weight of the isosorbide-based epoxy compound.

3. The composition of claim 1, which has an epoxy group equivalent weight of 120 g/eq to 500 g/eq.

4. The composition of claim 1, wherein the composition has a Brookfield viscosity of 500 cP to 2,000 cP as measured at 25°C.

5. A method for preparing an isosorbide-based epoxy compound, the method comprising:
(S10) reacting isosorbide, an organic halide and a basic compound in the presence of a phase transfer catalyst to obtain a reaction product including a salt and an isosorbide-based epoxy compound;
(S30) introducing the reaction product to a candle filter device to filter the salt and obtain a filtrate; and
(S50) removing the organic halide from the filtrate to obtain the isosorbide-based epoxy compound.

6. The method of claim 5, wherein the obtaining of a reaction product comprises:
(S11) mixing the isosorbide and the organic halide in the presence of the phase transfer catalyst to perform a ring-opening reaction under a temperature condition of 40°C to 100°C;
(S12) adding the basic compound to a product of the ring-opening reaction, and performing an epoxy substitution reaction under a temperature condition of 40°C to 100°C; and
(S13) subjecting a product of the substitution reaction to an azeotropic distillation reaction under a reduced pressure condition at a temperature of 40°C to 100°C to perform a ring-closing reaction.

7. The method of claim 5, wherein the candle filter device filtered a salt having a particle size of 2.7 µm or more.

8. The method of claim 5, wherein the obtaining of a filtrate involves performing filtration while maintaining a temperature condition of 20°C to 100°C.

9. The method of claim 5, wherein the isosorbide-based epoxy compound is represented by the following Chemical Formula 1: 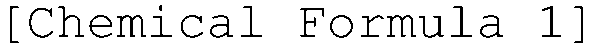 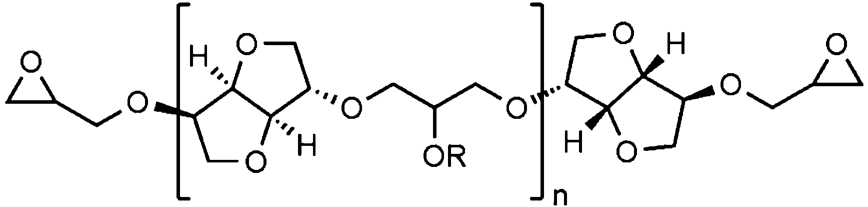 in Chemical Formula 1,
R is H or 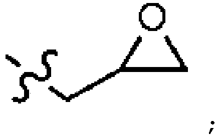 and
n is an integer of 0 to 100.

10. The method of claim 5, wherein a yield of the isosorbide-based epoxy compound obtained in the obtaining of an isosorbide-based epoxy compound is 90% or more.

11. A paint composition comprising the composition of any one of claims 1 to 4.
